# EUROPEAN PATENT SPECIFICATION

(11) **EP 3 089 181 B1**
(45) Date of publication and mention of the grant of the patent: **07.06.2023**
(21) Application number: 14873930.3
(22) Date of filing: 17.12.2014
(51) Int. Cl.: H01G 9/045, H01G 9/052, B32B 15/01, C22C 21/00

(54) **ELECTRODE FOIL FOR ALUMINUM ELECTROLYTIC CAPACITOR AND PRODUCTION METHOD FOR SAME**
ELEKTRODENFOLIE FÜR EINEN ALUMINIUM-ELEKTROLYTKONDENSATOR UND HERSTELLUNGSVERFAHREN DAFÜR
FEUILLE D'ÉLECTRODE POUR CONDENSATEUR ÉLECTROLYTIQUE EN ALUMINIUM ET SON PROCÉDÉ DE PRODUCTION

(30) Priority: 27.12.2013 JP 2013273418
(43) Date of publication of application: 02.11.2016
(73) Proprietor: Toyo Aluminium Kabushiki Kaisha, Osaka-shi, Osaka 541-0056 (JP)
(72) Inventor: TAIRA, Toshifumi, Osaka-shi, Osaka 541-0056 (JP); MURAMATSU, Kenji, Osaka-shi, Osaka 541-0056 (JP); MEHATA, Masashi, Osaka-shi, Osaka 541-0056 (JP)
(74) Representative: Marks & Clerk LLP
(86) International application number: PCT/JP2014/083381
(87) International publication number: WO 2015/098644

(56) References cited:
- JP-A- 2008 078 277
- JP-A- 2008 098 279
- JP-A- 2009 057 579
- JP-A- 2009 081 110
- JP-A- 2009 081 110
- US-A- 3 899 723
- US-A1- 2012 231 262

## Description

### Technical Field

The present invention relates to an electrode foil for use in aluminum electrolytic capacitors, in particular, an anode electrode foil for use in aluminum electrolytic capacitors, and a method for producing the electrode foil.

### Background Art

Aluminum electrolytic capacitors are widely used in various fields because they allow high capacity to be achieved at a low cost. Aluminum foil has been used as an electrode material for aluminum electrolytic capacitors. The surface area of aluminum foil can be increased by forming etching pits using an etching treatment. The surface is then anodized or subjected to chemical conversion treatment to form on the surface an oxide film, which functions as a dielectric. Therefore, various anode electrode materials (foil) for aluminum electrolytic capacitors for a variety of purposes can be produced by etching aluminum foil and forming an oxide film on the etched surface by applying a specific voltage to the surface according to the voltage to be used.

In recent years, in place of aluminum anode electrode foil, which has been etched to have an increased surface area, a sintered body formed by layering aluminum powder has been proposed (see, for example, Patent Literature (PTL) 1). The electrode foil for aluminum electrolytic capacitors produced by this method has been confirmed to have a surface area greater than the area of pits formed by etching. Furthermore, the method disclosed in PTL 1 does not require the use of an aqueous hydrochloric acid solution containing sulfuric acid, phosphoric acid, nitric acid, or the like, which are required in etching treatment. Therefore, the disclosed method is advantageous in terms of considerably reducing environmental impact, as well as the burden on production processes and the economy, compared to etching treatment.

### Citation List

### Patent Literature

PTL 1: JP2008-98279A

US 2012/0231262 A1 discloses an aluminium foil with a sintered body for the electrode of an electrolytic capacitor.

Patent documents JP 2009 081110 A and US 3,899,723 disclose aluminum foils containing manganese. These documents do not disclose a sintered body on the aluminium foil.

### Summary of Invention

### Technical Problem

However, when the present inventors attempted to chemically convert the electrode foil for aluminum electrolytic capacitors disclosed in PTL 1 on a production line during the production of the electrode foil, cracks and fissure occurred in the electrode foil and the electrode foil became broken. In particular, it was found that the smaller the particle diameter of the aluminum powder used for forming a sintered body, the more readily such breakage tends to occur. When chemical conversion treatment is performed on a production line, electrode foil is continuously fed using rolls (i.e., roll-to-roll method), which tends to cause large stress on the electrode foil. Such stress created on the electrode foil is considered to cause cracks and fissure in the electrode foil, resulting in breakage of the electrode foil. The smaller the particle diameter of the aluminum powder, the greater the surface area of the film formed on the aluminum foil surface. Accordingly, a smaller particle diameter is advantageous in terms of contributing to increase the capacitance of aluminum electrolytic capacitors. However, a smaller particle diameter tends to result in problems described above. It has been thus difficult for an electrode foil for aluminum electrolytic capacitors capable of providing high capacitance to be chemically converted on a production line without any breakage.

The present invention was made in view of the above problem. An object of the present invention is to provide an electrode foil for aluminum electrolytic capacitors in which breakage is less likely to occur even when chemical conversion treatment is performed under conditions susceptible to stress such as on a production line and that can securely provide high capacitance. Another object is to provide a method for producing the electrode foil.

### Solution to Problem

The present inventors conducted extensive research to achieve the above object. As a result, the inventors found that when an aluminum foil containing a specific amount of manganese (Mn) is used as a substrate in an electrode foil for aluminum electrolytic capacitors, the above object can be achieved. The present invention has been accomplished based on this finding.

More specifically, the present invention provides the following electrode foil for aluminum electrolytic capacitors and method for producing the electrode foil.
1. An electrode foil for aluminum electrolytic capacitors, comprising a sintered body of at least one aluminum or aluminum alloy powder, and a substrate supporting the sintered body, the substrate being an aluminum foil containing at least 50 ppm by weight but less than 20,000 ppm by weight of Mn.
2. The electrode foil for aluminum electrolytic capacitors according to Item 1, wherein the substrate is an aluminum foil containing at least 110 ppm by weight but less than 20,000 ppm by weight of Mn.
3. The electrode foil for aluminum electrolytic capacitors according to Item 1 or 2, wherein the powder has an average particle diameter (D₅₀) of at least 1.5 um but not more than 20 µm.
4. The electrode foil for aluminum electrolytic capacitors according to any one of Items 1 to 3, wherein the substrate has the sintered body on both surfaces, the substrate has a thickness of at least 15 um but not more than 80 µm, and the sintered bodies have a total thickness of at least 40 µm but not more than 600 µm.
5. A method for producing an electrode foil for aluminum electrolytic capacitors, comprising Step 1 of forming a film of a composition comprising at least one aluminum or aluminum alloy powder on at least one surface of an aluminum foil containing at least 50 ppm by weight but less than 20,000 ppm by weight of Mn and Step 2 of sintering the film at a temperature of at least 560°C but not more than 660°C, the method not comprising an etching step.
6. The method according to Item 5, wherein in Step 1, the film is formed on both surfaces of the aluminum foil.

### Advantageous Effects of Invention

The electrode foil for aluminum electrolytic capacitors of the present invention comprises, as a substrate, an aluminum foil containing at least 50 ppm by weight but less than 20,000 ppm by weight of Mn. Therefore, even when the electrode foil for aluminum electrolytic capacitors is continuously subjected to chemical conversion treatment on a production line, breakage is less likely to occur. Even when the particle diameter of the aluminum powder, which forms a sintered body of electrode foil for aluminum electrolytic capacitors, is reduced, breakage is less likely to occur during chemical conversion treatment. Accordingly, the electrode foil for aluminum electrolytic capacitors of the present invention is suitable for use as an electrode material for producing aluminum electrolytic capacitors having high capacitance.

### Description of Embodiments

Embodiments of the present invention are described below in detail.

### 1. Electrode Foil for Aluminum Electrolytic Capacitors

The electrode foil for aluminum electrolytic capacitors comprises a sintered body of at least one aluminum or aluminum alloy powder, and a substrate supporting the sintered body.

Aluminum foil is used as the substrate. In particular, in the present invention, an aluminum foil containing at least 50 ppm by weight but less than 20,000 ppm by weight of Mn (manganese), based on the total weight of the aluminum foil, is used. The electrode foil for aluminum electrolytic capacitors comprising such an aluminum foil as a substrate can be easily prevented from breakage even when subjected to chemical conversion treatment described below. In particular, when the Mn content is 110 ppm or more, breakage during chemical conversion treatment can be more easily prevented. The Mn content is particularly preferably 150 ppm or more. On the other hand, a Mn content of 20,000 ppm by weight or more can prevent breakage during chemical conversion treatment but increases leakage current of an aluminum electrolytic capacitor, which may decrease the performance of the aluminum electrolytic capacitor.

The aluminum foil may contain incidental impurities other than Mn or artificially added elements other than Mn. Examples of elements other than Mn include at least one element selected from the group consisting of iron (Fe), copper (Cu), silicon (Si), magnesium (Mg), chromium (Cr), zinc (Zn), titanium (Ti), vanadium (V), gallium (Ga), nickel (Ni), and boron (B). These elements may be contained in an amount that does not impair the effect of the present invention. For example, when the total amount of elements other than Mn is 1,000 ppm by weight or less, relative to the aluminum foil, leakage current from an aluminum electrolytic capacitor may be more easily prevented from occurring.

The thickness of the aluminum foil is not particularly limited, and may be at least 10 um but not more than 200 µm, and is preferably at least 15 um but not more than 80 µm.

The aluminum foil can be produced by a known method. The production method is not particularly limited. For example, a molten metal of an aluminum alloy containing Mn and one or more other optionally added elements is prepared and casted to obtain an ingot. The ingot is appropriately homogenized and then subjected to hot rolling and cold rolling to obtain an aluminum foil as a substrate.

During the cold rolling step, intermediate annealing may be performed at a temperature within the range of 50 to 500°C, and particularly 150 to 400°C. After the cold rolling step, annealing may be performed in the range of 150 to 650°C, and particularly 350 to 550°C to obtain a soft foil.

The sintered body in the electrode foil for aluminum electrolytic capacitors comprises a sintered body of at least one aluminum or aluminum alloy powder.

The aluminum powder preferably has an aluminum purity of 99.8% by weight or more. The aluminum alloy powder is preferably a powder of an alloy containing at least one element selected from the group consisting of iron, silicon, copper, manganese, magnesium, chromium, zinc, titanium, vanadium, gallium, nickel, boron, and zirconium. The content of each of such elements is preferably 1,000 ppm by weight or less, and particularly preferably not more than 300 ppm by weight, based on the total amount of the aluminum alloy powder.

The average particle diameter (D₅₀) of the aluminum powder and the average particle diameter (D₅₀) of the aluminum alloy powder are both preferably at least 1.5 um but not more than 20 um. When the average particle diameter (D₅₀) is within this range, an aluminum electrolytic capacitor with a high capacitance can be obtained. It is particularly preferable that the above powder has an average particle diameter (D₅₀) of at least 1.5 um but not more than 5.0 um. The average particle diameter (D₅₀) within this range can securely provide capacitance equivalent to or greater than that of known etched foil. The average particle diameter (D₅₀) as used herein is a value obtained by using laser diffractometry. More specifically, the average particle diameter refers to a particle diameter corresponding to 50th percentile value (median value) of all the particles in a particle diameter distribution curve that is calculated, based on the relationship between each particle diameter and the number of particles having the diameter.

The aluminum powder and aluminum alloy powders may have any shape, such as spherical, amorphous, scaly, fibrous, and like shapes. Among these, a powder of spherical particles is particularly preferable.

The aluminum powder and aluminum alloy powders to be used may be powders produced by known methods. For example, powders produced by an atomizing method, a melt spinning process, a rotating disk method, a rotating electrode process, a rapid solidification process, etc., can be used. For industrial production, an atomizing method, in particular, a gas atomizing method, is preferable. More specifically, a powder obtained by atomizing molten metal is preferable.

The sintered body described above is preferably formed as a porous sintered body. The porous sintered body is formed by sintering the above powder or the like while keeping a space between the powder particles. The electrode foil for aluminum electrolytic capacitors comprising such a porous sintered body is advantageous because a desired capacitance can be obtained without etching. The capacitance of the electrode foil for aluminum electrolytic capacitors varies depending on the porosity of the porous sintered body. For example, the desired capacitance can be obtained by adjusting the porosity within the range that the porosity is at least 10%. The porosity of the sintered body can be suitably adjusted by any method. For example, the porosity of the sintered body can be controlled by adjusting the average particle diameter (D₅₀) of the powder used as a starting material of the sintered body, the kind of material (e.g., resin binder) to be incorporated into a paste composition containing the starting powder, the composition ratio, etc.

The sintered body may contain one or more insulating particles selected from alumina, titania, silica, etc.

The sintered body may be formed on only one or both surfaces of the aluminum foil, which is a substrate. When a sintered body is formed on both surfaces of the aluminum foil, the sintered bodies are preferably arranged symmetrically.

The thickness of the sintered body is preferably at least 40 um but not more than 600 µm. When the aluminum foil has a sintered body on both surfaces, the total thickness of the sintered bodies formed on the surfaces is preferably within the range described above. When the sintered body or bodies with such a thickness are formed and the aluminum foil has a thickness of at least 15 µm but not more than 80 um as described above, breakage of the electrode foil for aluminum electrolytic capacitors is less likely to occur during chemical conversion treatment, thus facilitating the conversion treatment step. It is particularly preferable that the aluminum foil has a thickness of at least 15 µm but not less than 80 µm, and that the sintered bodies have a total thickness of at least 40 µm but not more than 200 µm. The thickness of the sintered body refers to an average value obtained by measuring the thickness at any seven points of the sintered body using a micrometer and averaging five of those values, excluding the maximum and minimum values.

### 2. Method for Producing the Electrode Foil for Aluminum Electrolytic Capacitors

The following describes one example of a method for producing the electrode foil for aluminum electrolytic capacitors.

The electrode foil for electrolytic capacitors is produced by a method comprising Step 1 of forming a film of a composition containing at least one aluminum or aluminum alloy powder on at least one surface of an aluminum foil containing at least 50 ppm by weight but less than 20,000 ppm by weight of Mn; and Step 2 of sintering the film at a temperature of at least 560°C but not more than 660°C.

In Step 1, a film of a composition containing aluminum powder is formed on one or both surfaces of an aluminum foil containing at least 50 ppm by weight but less than 20,000 ppm by weight of Mn. The aluminum foil used in Step 1 has the same structure as that of the aluminum foil described above. The preparation step of producing the aluminum foil may be performed before or in Step 1.

The composition containing aluminum powder can be produced by mixing an aluminum powder with one or more optionally added binders and solvents. Other materials, such as known sintering aids and surfactants, may be mixed into the composition containing aluminum powder. From the viewpoint of facilitating film formation on aluminum foil, it is particularly preferable that the composition contains an aluminum powder, a binder, and a solvent as essential components. In addition to the aluminum powder, one or more aluminum alloy powders described above may be mixed into the composition. The preparation of the composition containing aluminum powder may be performed before or during Step 1.

The aluminum powder contained in the composition has the same structure as the aluminum powder described above.

Examples of preferable binders include carboxy-modified polyolefin resins, vinyl acetate resins, vinyl chloride resins, vinyl chloride-vinyl acetate copolymers, vinyl alcohol resins, butyral resins, polyvinyl fluoride resins, acrylic resins, polyester resins, urethane resins, epoxy resins, urea resins, phenol resins, acrylonitrile resins, cellulose resins, paraffin wax, polyethylene wax, and other synthetic resins; glue, sumac, pine resin, beeswax, and like natural resins; and waxes, tar, and the like. These binders may include binders that volatilize upon heating and binders that remain as a residue with aluminum powder after pyrolysis, which varies depending on the molecular weight, type of material used, etc. The binders may be selectively used according to, for example, the desired characteristics.

Examples of usable solvents include water and organic solvents, such as ethanol, toluene, ketones, and esters. Such solvents may be used singly or in a combination of two or more.

The composition containing aluminum powder can be used as a coating fluid for forming a film on the aluminum foil. This coating fluid may be applied to one or both surfaces of the aluminum foil. When the coating fluid is applied to both surfaces of the aluminum foil, the final electrode foil for aluminum electrolytic capacitors has a sintered body on both its surfaces. By using such an electrode foil for aluminum electrolytic capacitors, an aluminum electrolytic capacitor having higher capacitance per projected area can be produced.

A film of the composition containing aluminum powder is formed on one or both surfaces of the aluminum foil by applying the coating fluid to the aluminum foil. After the coating fluid is applied, drying treatment may be performed, if necessary, to form a film. The drying temperature may be, for example, within the range of 20 to 300°C. Before forming a film on the aluminum foil, the surface of the aluminum foil may be roughened. The surface roughening method is not particularly limited, and any known technique, such as washing, or blasting, may be used.

The thickness of the films formed on the aluminum foil may be adjusted in such a manner that the sintered bodies formed by sintering films in subsequent Step 2 have a total thickness of at least 40 µm but not more than 600 um. When the films are formed to such a thickness, breakage of the electrode foil for aluminum electrolytic capacitors during the chemical conversion treatment can be more easily inhibited.

In Step 2, the film formed on the aluminum foil in Step 1 is sintered at a temperature within the range of at least 560°C but not more than 660°C. The sintering time varies depending on the sintering temperature and can typically be set appropriately within the range of about 5 to 24 hours. The sintering atmosphere is not particularly limited, and may be a vacuum atmosphere, an inert gas atmosphere, an oxidizing gas atmosphere (air), a reducing atmosphere, or the like. In particular, a vacuum atmosphere or a reducing atmosphere is preferable. The pressure conditions may also be normal pressure, reduced pressure, or increased pressure.

When the composition contains an organic component such as a binder, the composition may be degreased or otherwise treated by performing heat treatment at a temperature within the range of at least 100°C but not more than 600°C for 5 hours or more after Step 1 but before Step 2. The heat treatment atmosphere is not particularly limited.

An electrode foil for aluminum electrolytic capacitors comprising aluminum foil and a sintered body or sintered bodies formed on the aluminum foil is obtained by performing Step 2 described above.

The electrode foil obtained according to the above production method can be directly used as an electrode (electrode foil) for aluminum electrolytic capacitors without etching. Accordingly, the above method for producing the electrode foil for aluminum electrolytic capacitors is advantageous in that the equipment and time required for etching treatment can be eliminated and environmental impact can also be reduced.

If necessary, the electrode foil for aluminum electrolytic capacitors produced by the above method may be chemically converted, for example, be anodized, to form a dielectric. Specifically, the method for producing an electrode foil for aluminum electrolytic capacitors may include, in addition to Steps 1 and 2, the above chemical conversion treatment as Step 3. The electrode foil for aluminum electrolytic capacitors after being subjected to Step 3 can be used as an electrode for aluminum electrolytic capacitors.

Although the conditions for the chemical conversion treatment are not particularly limited, the treatment may be performed by applying a current of at least about 10 mA/cm² but not more than 400 mA/cm² to the electrode foil for 5 minutes or more in a boric acid solution having a concentration of at least 0.01 mol but not more than 5 mol at a temperature of not lower than 30°C and not higher than 100°C. The boric acid solution may contain ammonium pentaborate and the like. Before treatment with the boric acid solution, if necessary, the electrode foil may be hydrated, or may be subjected to an intermediate treatment by performing a treatment with an oxalic acid dihydrate solution after treatment with the boric acid solution. Thereafter, a drying treatment in a temperature range of 450 to 550°C may be further performed. The chemical conversion treatment is typically performed while feeding electrode foil for aluminum electrolytic capacitors using one or more rolls on a production line.

The electrode foil for aluminum electrolytic capacitors of the present invention comprises as a substrate an aluminum foil containing not less than 50 ppm by weight but less than 20,000 ppm by weight of Mn. When such an aluminum foil is used as a substrate, a sintered body is firmly adhered to and formed on the surface of aluminum foil. As a result, even when chemical conversion treatment is performed under conditions in which stress is prone to be created on electrode foil, such as on a production line, cracks and fissure, and eventually breakage, are less likely to occur in the electrode foil. It is speculated that when sintering occurs between aluminum foil and aluminum powder, Mn contained in the aluminum foil promotes sintering with the aluminum powder, so that the sintered body is firmly adhered to the aluminum foil.

### Examples

The present invention is described below more specifically with reference to Examples but is not limited to the embodiments in the Examples.

First, before the Examples, a test was performed to investigate the relationship between the average particle diameter (D₅₀) of aluminum powder, which was used a starting material for a sintered body, and the occurrence of breakage of the obtained electrode foil for aluminum electrolytic capacitors during chemical conversion treatment (see the following Reference Examples 1 to 9).

### Reference Example 1

Sixty parts by weight of an aluminum powder with an average particle diameter (D₅₀) of 1.5 um and 40 parts by weight of an ethyl cellulose binder were mixed to obtain a mixture. The mixture was dispersed in toluene used as a solvent to prepare a coating fluid with a solids content of 60 wt.%. The coating fluid thus prepared was applied to one surface of an aluminum foil containing 6 ppm by weight of Mn and having a thickness of 30 µm using a comma coater and then dried to form a film. Subsequently, the coating fluid was also applied to the surface on the opposite side of the aluminum foil and dried in the same manner to form a film. After the thus obtained aluminum foil having a coating film on both surfaces was heat-treated at a temperature of 300°C for 2 hours in an air atmosphere, sintering was performed at a temperature of 635°C in an argon gas atmosphere for 7 hours. An electrode foil having a sintered body formed on both surfaces was obtained by the sintering. The average thickness of each aluminum powder layer after sintering (sintered layer) was measured using a micrometer and found to be 50 µm on each surface.

### Reference Example 2 to 9

Each electrode foil in Reference Examples 2 to 9 was produced in the same manner as in Reference Example 1 except that the average particle diameter (D₅₀) of the aluminum powder was changed as shown in Table 1 below. The average thickness of each aluminum powder layer after sintering (sintered layer) was the same as in Reference Example 1.

Each electrode foil obtained in Reference Examples 1 to 9 was subjected to chemical conversion treatment while being fed using rolls on a production line.

The occurrence of breakage of each electrode foil during chemical conversion treatment was evaluated according to the following criteria:
A: The electrode foil passed through the chemical conversion line without any breakage over the entire width of the electrode foil regardless of whether the chemical conversion voltage was 200 V or 700 V.
C: The electrode foil became broken over the entire width of the electrode foil and did not pass through the chemical conversion line regardless of whether the chemical conversion voltage was 200 V or 700 V.
B: The electrode foil passed through the chemical conversion line without any breakage over the entire width of the electrode foil at a chemical conversion voltage of 200 V, but the electrode foil was broken and did not pass through the chemical conversion line at a chemical conversion voltage of 700 V.

Table 1 shows the evaluation results. Table 2 shows the conditions for the chemical conversion treatment.

**Table 1**

| Constituents and evaluation items | | Reference Example | | | | | | | | |
|---|---|---|---|---|---|---|---|---|---|---|
| | | 1 | 2 | 3 | 4 | 5 | 6 | 7 | 8 | 9 |
| Constituents of electrode | Average particle diameter of aluminum powder D₅₀ (µm) | 1.5 | 3 | 4 | 5 | 6 | 7 | 9 | 15 | 20 |
| | Thickness of sintered body on each surface (µm) | 50 | 50 | 50 | 50 | 50 | 50 | 50 | 50 | 50 |
| | Total thickness of the sintered bodies (µm) | 100 | 100 | 100 | 100 | 100 | 100 | 100 | 100 | 100 |
| | Thickness of aluminum foil (µm) | 30 | 30 | 30 | 30 | 30 | 30 | 30 | 30 | 30 |
| | Mn content of aluminum foil (ppm by weight) | 6 | 6 | 6 | 6 | 6 | 6 | 6 | 6 | 6 |
| Evaluation of occurrence of breakage during chemical conversion treatment | | C | C | C | C | C | C | C | B | A |

**Table 2**

| Treatment name | Details of treatment conditions | | |
|---|---|---|---|
| Hydration treatment | Treatment time (min) | | 4 |
| Chemical conversion treatment | Composition of chemical conversion solution (weight ratio) | Pure water | 1000 |
| | | Boric acid | 100 |
| | | Ammonium pentaborate | 0.9 |
| | Chemical conversion voltage (V) | | 200 V or 700 V |
| Intermediate treatment | Composition of chemical conversion solution (weight ratio) | Pure water | 1000 |
| | | Oxalic acid dihydrate | 10 |
| | Treatment time (min) | | 6 |
| Drying treatment | Temperature (°C) | | 450 to 550 |

Table 1 shows that when aluminum powder has a small average particle diameter (D₅₀) (Reference Examples 1 to 8), breakage occurs in the electrode foil during chemical conversion treatment. From the viewpoint of increasing the capacitance of capacitors, it is advantageous for aluminum powder to have a smaller average particle diameter (D₅₀). However, as shown in the results in Table 1, aluminum powder with a smaller particle diameter has a problem of breakage during chemical conversion treatment. On the other hand, when aluminum powder has a large average particle diameter (D₅₀) (20 µm), breakage during chemical conversion treatment does not occur, but an electrode foil having high capacitance cannot be obtained. The above results thus show that an electrode foil having high capacitance and being free of breakage during chemical conversion treatment was not obtained in any of the Reference Examples.

Accordingly, as shown in the Examples and Comparative Examples below, electrode foil was prepared using aluminum foil containing a specific amount of Mn, and an aluminum powder having an average particle diameter (D₅₀) of 1.5 µm, which allows the production of a high-capacity electrode. The occurrence of breakage during chemical conversion treatment was evaluated in the same manner as in the Reference Examples described above.

### Example 1

60 parts by weight of an aluminum powder with an average particle diameter (D₅₀) of 1.5 um and 40 parts by mass of an ethyl cellulose binder were mixed to obtain a mixture. This mixture was dispersed in toluene as a solvent to obtain a coating fluid having a solids content of 60 wt.%.

On the other hand, as shown in Table 3, ten types of aluminum foil, each having a different Mn content in the range of 50 to 21,000 ppm by weight, were prepared. Each aluminum foil had a thickness of 30 um. After the coating fluid prepared above was applied to one surface of each of the ten types of aluminum foil using a comma coater, the coated surface was dried to form a film. Subsequently, the coating fluid was also applied to the surface on the opposite side of the aluminum foil and dried in the same manner to form a film. After the films were formed on both surfaces in this manner, each aluminum foil was heat-treated at a temperature of 300°C in an air atmosphere for 2 hours, and sintering was performed at a temperature of 635°C in an argon gas atmosphere for 7 hours. Ten types of electrode foil, each having a sintered body on both surfaces of the aluminum foil, were obtained by the sintering. The average thickness of each aluminum powder layer after sintering (sintered layer) was measured using a micrometer and found to be 20 µm on each surface (see Table 3.)

### Example 2

Ten types of electrode foil were produced in the same manner as in Example 1 except that the thickness of each aluminum foil was changed to 15 µm as shown in Table 3. The average thickness of the aluminum powder layer of each electrode foil after sintering (sintered layer) was the same as in Example 1.

### Examples 3, 4, and 6

Ten types of electrode foil were produced in the same manner as in Example 1 except that each film was formed in such a manner that each aluminum powder layer after sintering (sintered layer) had the average thickness shown in Table 3.

### Example 5

Ten types of electrode foil were produced in the same manner as in Example 1 except that each film was formed in such a manner that the aluminum foil had a thickness of 80 um and each aluminum powder layer after sintering (sintered layer) had the average thickness shown in Table 3.

### Comparative Example 1

Two types of electrode foil were produced in the same manner as in Example 1 except that two types of aluminum foil, i.e., one containing 10 ppm by weight of Mn and the other containing 40 ppm by weight of Mn, were used as aluminum foil.

### Comparative Example 2

Two types of electrodes were produced in the same manner as in Comparative Example 1 except that the thickness of each aluminum foil was changed to 15 µm.

### Comparative Examples 3, 4, and 6

Two types of electrodes were produced in the same manner as in Comparative Example 1 except that films were formed in such a manner that each aluminum powder layer after sintering (sintered layer) had the average thickness shown in Table 4.

### Comparative Example 5

Two types of electrode foil were produced in the same manner as in Comparative Example 1 except that the thickness of each aluminum foil was changed to 80 µm and films were formed in such a manner that each aluminum powder layer after sintering (sintered layer) had the average thickness shown in Table 3.

**Table 3**

| Constituents and evaluation items | | | Example | | | | | |
|---|---|---|---|---|---|---|---|---|
| | | | 1 | 2 | 3 | 4 | 5 | 6 |
| Constituents of electrode foil | Average particle diameter of aluminum powder D₅₀ (µm) | | 1.5 | 1.5 | 1.5 | 1.5 | 1.5 | 1.5 |
| | Thickness of sintered body on one surface (µm) | | 20 | 20 | 100 | 300 | 300 | 50 |
| | Total thickness of sintered bodies (µm) | | 40 | 40 | 200 | 600 | 600 | 100 |
| | Thickness of aluminum foil (µm) | | 30 | 15 | 30 | 30 | 80 | 30 |
| Evaluation of occurrence of breakage during chemical conversion treatment | Mn content of aluminum foil (ppm by weight) | 50 | A | A | A | B | A | B |
| | | 110 | A | A | A | B | A | A |
| | | 150 | A | A | A | A | A | A |
| | | 200 | A | A | A | A | A | A |
| | | 300 | A | A | A | A | A | A |
| | | 1000 | A | A | A | A | A | A |
| | | 3000 | A | A | A | A | A | A |
| | | 8000 | A | A | A | A | A | A |
| | | 10000 | A | A | A | A | A | A |
| | | 21000 | A | A | A | A | A | A |

**Table 4**

| Constituents and evaluation items | | | Comparative Example | | | | | |
|---|---|---|---|---|---|---|---|---|
| | | | 1 | 2 | 3 | 4 | 5 | 6 |
| Constituents of electrode | Average particle diameter of aluminum powder D₅₀ (µm) | | 1.5 | 1.5 | 1.5 | 1.5 | 1.5 | 1.5 |
| | Thickness of sintered body on one surface (µm) | | 20 | 20 | 100 | 300 | 300 | 50 |
| | Total thickness of sintered bodies (µm) | | 40 | 40 | 200 | 600 | 600 | 100 |
| | Thickness of aluminum foil (µm) | | 30 | 15 | 30 | 30 | 80 | 30 |
| Evaluation of occurrence of breakage during chemical conversion treatment | Mn content of aluminum foil (ppm by weight) | 10 | C | C | C | C | C | C |
| | | 40 | C | C | C | C | C | C |

The electrode foil obtained in the above Examples and Comparative Examples was subjected to chemical conversion treatment in the same manner as in the electrode foil obtained in the above Reference Examples. The occurrence of breakage of each electrode foil during chemical conversion treatment was evaluated using the same evaluation method and evaluation criteria. Table 3 shows the evaluation results of the electrode foil in the Examples. Table 4 shows the evaluation results of the electrode foil in the Comparative Examples.

As is clear from Table 3, due to a Mn content of at least 50 ppm by weight in the aluminum foil used as a substrate, the electrode foil breakage phenomenon was not observed at least at a chemical conversion voltage of 200 V. Table 3 further confirms that when the Mn concentration in the aluminum foil used as a substrate was 110 ppm by weight or more, the probability of electrode foil breakage at a chemical conversion voltage of 700 V was reduced. Furthermore, when the Mn concentration in the aluminum foil used as a substrate was 150 ppm by weight or more, the electrode foil breakage phenomenon was not observed under any conditions, i.e., regardless of whether the chemical conversion voltage was 200 V or 700 V.

As is clear from Examples 1 to 6 above, when the Mn content was 50 ppm by weight or 110 ppm by weight, some types of electrode foil may become broken at a high chemical conversion voltage. When the Mn content exceeded 150 ppm by weight, breakage of the electrode foil was inhibited even at a high chemical conversion voltage. Furthermore, in Examples 1 to 6, electrode foil was prepared using an aluminum powder with an average particle diameter (D₅₀) of 1.5 pm; therefore, high capacitance electrodes were obtained.

In contrast, as is clear from Table 4, due to a Mn content of less than 50 ppm by weight in the electrode foils obtained in Comparative Examples 1 to 5, breakage was observed in all types of electrode foil even at a chemical conversion voltage of 200 V.

### Experimental Example 1

Next, leakage current µA/cm²) of a capacitor produced using electrode foil having constituents equivalent to those of Example 6 was measured in accordance with JISC 5101-1. The relationship between Mn content of the aluminum foil and leakage current was investigated.

Table 5 shows the measurements of leakage current.

As is clear from Table 5, the higher the Mn concentration, the larger the leakage current. In particular, when the Mn concentration was more than 20,000 ppm by weight, a very large leakage current resulted. Electrode foil that exhibits such a large leakage current is considered to be unsuitable for use in aluminum electrolytic capacitors. Since an excessively high Mn content tends to cause defects in oxide films formed on the surface of electrode foil by chemical conversion treatment, a very large leakage current is considered to result. Accordingly, the Mn content must not exceed 20,000 ppm by weight.

**Table 5**

| Leakage current µA/cm²) | | Experimental Example 1 |
|---|---|---|
| Mn content of aluminum foil (ppm by weight) | 10 | 12.2 |
| | 40 | 12.7 |
| | 50 | 12.6 |
| | 110 | 13.0 |
| | 300 | 12.1 |
| | 1,000 | 13.6 |
| | 3, 000 | 14.9 |
| | 8, 000 | 15.4 |
| | 10,000 | 16.3 |
| | 20,000 | 44.0 |
| | 21,000 | 45.1 |

## Claims

1. An electrode foil for aluminum electrolytic capacitors comprising a sintered body of at least one aluminum or aluminum alloy powder, and a substrate supporting the sintered body, the substrate being an aluminum foil,
**characterised in that** the aluminum foil contains at least 50 ppm by weight but less than 20,000 ppm by weight of Mn.

2. The electrode foil for aluminum electrolytic capacitors according to claim 1, wherein the substrate is an aluminum foil containing at least 110 ppm by weight but less than 20,000 ppm by weight of Mn.

3. The electrode foil for aluminum electrolytic capacitors according to claim 1 or 2, wherein the powder has an average particle diameter (D₅₀) of at least 1.5 µm but not more than 20 µm, and
wherein the average particle diameter (D₅₀) is a value obtained by using laser diffractometry, and refers to a particle diameter corresponding to 50th percentile value (median value) of all the particles in a particle diameter distribution curve that is calculated, based on the relationship between each particle diameter and the number of particles having the diameter.

4. The electrode foil for aluminum electrolytic capacitors according to any one of claims 1 to 3, wherein the substrate has the sintered body on both surfaces, the substrate has a thickness of at least 15 um but not more than 80 µm, and the sintered bodies have a total thickness of at least 40 um but not more than 600 µm.

5. A method for producing an electrode foil for aluminum electrolytic capacitors, comprising:
Step 1 of forming a film of a composition comprising at least one aluminum or aluminum alloy powder on at least one surface of an aluminum foil; and
Step 2 of sintering the film at a temperature of at least 560°C but not more than 660°C, the method not comprising an 9610503-1 etching step,
**characterised in that** the aluminum foil contains at least 50 ppm by weight but less than 20,000 ppm by weight of Mn.

6. The method according to claim 5, wherein in Step 1, the film is formed on both surfaces of the aluminum foil.

## Patentansprüche

1. Elektrodenfolie für Aluminiumelektrolytkondensatoren, einen gesinterten Körper aus mindestens einem Aluminium- oder einem Aluminiumlegierungspulver und ein Substrat umfassend, das den gesinterten Körper trägt, wobei das Substrat eine Aluminiumfolie ist, **dadurch gekennzeichnet, dass** die Aluminiumfolie mindestens 50 Gewichts-ppm, jedoch weniger als 20.000 Gewichts-ppm Mn enthält.

2. Elektrodenfolie für Aluminiumelektrolytkondensatoren nach Anspruch 1, wobei das Substrat eine Aluminiumfolie ist, die mindestens 110 Gewichts-ppm, jedoch weniger als 20.000 Gewichts-ppm Mn enthält.

3. Elektrodenfolie für Aluminiumelektrolytkondensatoren nach Anspruch 1 oder 2, wobei das Pulver einen mittleren Partikeldurchmesser (D₅₀) von mindestens 1,5 µm, jedoch nicht mehr als 20 µm aufweist, und
wobei der mittlere Partikeldurchmesser (D₅₀) ein Wert ist, der mit Hilfe von Laserdiffraktometrie gewonnen wird und sich auf einem Partikeldurchmesser bezieht, der dem 50. Perzentilwert (Medianwert) aller Partikel in einer Verteilungskurve des Partikeldurchmessers entspricht, die basierend auf der Beziehung zwischen jedem Partikeldurchmesser und der Anzahl von Partikeln mit dem Durchmesser berechnet ist.

4. Elektrodenfolie für Aluminiumelektrolytkondensatoren nach einem der Ansprüche 1 bis 3, wobei das Substrat den gesinterten Körper auf beiden Oberflächen aufweist, das Substrat eine Dicke von mindestens 15 µm, jedoch nicht mehr als 80 µm aufweist und die gesinterten Körper eine Gesamtdicke von mindestens 40 µm, jedoch nicht mehr als 600 µm aufweisen.

5. Verfahren zum Herstellen einer Elektrodenfolie für Aluminiumelektrolytkondensatoren, umfassend:
einen Schritt 1 des Bildens eines Films einer Zusammensetzung, die mindestens ein Aluminium- oder Aluminiumlegierungspulver umfasst, auf mindestens einer Oberfläche einer Aluminiumfolie, und
einen Schritt 2 des Sinters des Films bei einer Temperatur von mindestens 560 °C, jedoch nicht mehr als 660 °C, wobei das Verfahren keinen Ätzschritt umfasst,
**dadurch gekennzeichnet, dass** die Aluminiumfolie mindestens 50 Gewichts-ppm, jedoch weniger als 20.000 Gewichts-ppm Mn enthält.

6. Verfahren nach Anspruch 5, wobei in Schritt 1 der Film auf beiden Oberflächen der Aluminiumfolie gebildet wird.

## Revendications

1. Feuille d'électrode pour condensateurs électrolytiques en aluminium comprenant un corps fritté en au moins une poudre d'aluminium ou d'alliage d'aluminium et un substrat supportant le corps fritté, le substrat étant une feuille d'aluminium, **caractérisée en ce que** la feuille d'aluminium contient au moins 50 ppm en poids, mais moins de 20 000 ppm en poids, de Mn.

2. Feuille d'électrode pour condensateurs électrolytiques en aluminium selon la revendication 1, dans laquelle le substrat est une feuille d'aluminium contenant au moins 110 ppm en poids, mais moins de 20 000 ppm en poids, de Mn.

3. Feuille d'électrode pour condensateurs électrolytiques en aluminium selon la revendication 1 ou la revendication 2, dans laquelle la poudre présente un diamètre de particule moyen (D₅₀) d'au moins 1,5 µm, mais de pas plus de 20 µm, et
dans laquelle le diamètre de particule moyen (D₅₀) est une valeur obtenue à l'aide de la diffractométrie laser, et fait référence à un diamètre de particule correspondant à une valeur au 50ième percentile (valeur médiane) de toutes les particules dans une courbe de répartition de diamètres de particules qui est calculée sur la base de la relation entre chaque diamètre de particule et le nombre de particules présentant le diamètre.

4. Feuille d'électrode pour condensateurs électrolytiques en aluminium selon l'une quelconque des revendications 1 à 3, dans laquelle le substrat présente le corps fritté sur les deux surfaces, le substrat présente une épaisseur d'au moins 15 µm, mais de pas plus de 80 µm, et les corps frittés présentent une épaisseur totale d'au moins 40 µm, mais de pas plus de 600 µm.

5. Procédé permettant de produire une feuille d'électrode pour des condensateurs électrolytiques en aluminium, comprenant :
une étape 1 consistant à former un film d'une composition comprenant au moins une poudre d'aluminium ou d'alliage d'aluminium sur au moins une surface d'une feuille d'aluminium ; et
une étape 2 consistant à fritter le film à une température d'au moins 560 °C, mais de pas plus de 660 °C, le procédé ne comprenant pas d'étape de gravure,
**caractérisé en ce que** la feuille d'aluminium contient au moins 50 ppm en poids, mais moins de 20 000 ppm en poids, de Mn.

6. Procédé selon la revendication 5, dans lequel dans l'étape 1, le film est formé sur les deux surfaces de la feuille d'aluminium.
